# EUROPÄISCHE PATENTSCHRIFT

(11) **EP 0 731 264 B1**
(45) Veröffentlichungstag und Bekanntmachung des Hinweises auf die Patenterteilung: **26.05.1999**
(21) Anmeldenummer: 96101418.0
(22) Anmeldetag: 01.02.1996
(51) Int. Cl.: F02B 25/00, F02F 1/22

(54) **Einlasssytem für eine Zweitakt-Brennkraftmaschine**
Intake system for a two-stroke type internal combustion engine
Système d'admission pour un moteur à combustion interne du type à deux temps

(30) Priorität: 02.03.1995 DE 19507220
(43) Veröffentlichungstag der Anmeldung: 11.09.1996
(73) Patentinhaber: DaimlerChrysler AG, 70567 Stuttgart (DE)
(72) Erfinder: Duvinage, Frank, Dr.-Ing., D-73230 Kirchheim (DE); Karl, Günter, Dr.-Ing., D-73732 Esslingen (DE); Mikulic, Leopold, Dr.-Techn., D-73773 Aichwald (DE); Krämer, Michael, Dr.-Ing., D-73274 Notzingen (DE); Abthoff, Jörg, Dr.-Ing., D-73655 Plüderhausen (DE)

(56) Entgegenhaltungen:
- CH-A- 163 982
- CH-A- 245 172
- DE-A- 970 977
- DE-C- 488 428
- DE-C- 913 598
- GB-A- 273 143
- GB-A- 2 030 217
- US-A- 1 992 328
- US-A- 2 137 344
- PATENT ABSTRACTS OF JAPAN vol. 7, no. 92 (M-208) [1237] , 16.April 1983 & JP-A-58 015714 (HITACHI), 29.Januar 1983,
- Soviet inventions illustrated, section B, Derwent Publication London, SU-A-276624 (Strunge) 3 April 1969 XP002025262

## Beschreibung

Die Erfindung bezieht sich auf ein Einlaßsystem für eine Zweitakt-Brennkraftmaschine gemäß dem Oberbegriff des Patentanspruchs 1.

Aus der GB-A-2 030 217 ist ein gattungsgemäßes Einlaßsystem für eine Zweitakt-Brennkraftmaschine bekannt, wobei an deren Zylinderumfang radiale bzw. tangentiale Spülluftöffnungen in mindestens zwei Einlaßreihen verteilt angeordnet sind. Besagte Einlaßreihen sind zwei voneinander getrennten Zuströmebenen zugeordnet, wobei eine zylinderlaufflächenseitige Öffnung der Spülluftöffnungen und die Zufuhr von Spülluft in den Zylinder von einem in diesem hin- und herbeweglichen Kolben gesteuert werden. Jede Zuströmebene umfaßt mindestens ein eigenes Steuerorgan zur Regelung der Zuströmung von Spülluft zu den Einlaßreihen und die Steuerorgane sind in Abhängigkeit vom Motorbetriebspunkt regelbar.

Des weiteren ist aus der DE 28 54 346 C2 ist ein Einlaßsystem für eine Zweitakt-Brennkraftmaschine mit Gleichstromspülung bekannt. Die Brennkraftmaschine umfaßt einen Arbeitszylinder nebst Zylinderlauffläche, wobei in dessen Wand am Umfang des Zylinders verteilte und in zwei Einlaßreihen übereinander angeordnete Spülluftschlitze angeordnet sind. Die zylinderlaufflächenseitige Öffnung der Spülluftschlitze und die Zufuhr von Spülluft in den Zylinder wird von einem in diesem hin- und herbeweglichen Kolben gesteuert. Die Brennkraftmaschine besitzt ein von der Arbeitszylinder/Kolben-Baugruppe getrennt ausgebildetes Zusatzgebläse, mit dem Frischluft durch zwei übereinanderliegende Einlaßreihen der Spülluftschlitze in den Arbeitszylinder förderbar ist.

Aus der EP 0 204 687 A2 ist eine Zweitakt-Brennkraftmaschine mit einem Zylinder bekannt, an dessen Zylinderwand am Umfang verteilte Spülluftschlitze angeordnet sind, wobei eine Steuereinrichtung vorgesehen ist, die den Drall der durch die Einlaßschlitze in den Zylinder eintretenden Frischladung beeinflußt. Der Frischluftstrom wird in zwei Teilströme aufgeteilt, sodaß der Frischladung in den den Zylinder umgebenden Frischladungsraum ein vorzugsweise von der Drehzahl und Last der Brennkraftmaschine abhängiger, über die Steuereinrichtung steuerbarer Vordrall erteilt wird.

Zum allgemeinen technischen Hintergrund wird noch auf die Druckschriften DE-PS 10 15 267, DE 29 09 591 C2, DE 35 10 770 C2 und DE 41 33 138 A1 verwiesen.

Der Erfindung liegt die Aufgabe zugrunde, ein gattungsgemäßes Einlaßsystem für eine Zweitakt-Brennkraftmaschine derart auszubilden, daß bei geöffneten Spülluftöffnungen eine möglichst variable Regelung von Drall und Volumenstrom der zugeführten Frischluft und damit eine wesentliche Reduzierung des Kraftstoffverbrauches sowie eine erhebliche Verminderung der Schadstoffemissionen der Brennkraftmaschine erreichbar ist.

Die .Aufgabe wird erfindungsgemäß durch die im Kennzeichen des Patentanspruchs 1 gegebenen Merkmale gelöst.

Ein Vorteil des erfindungsgemäßen Einlaßsystems liegt darin, daß durch die erfindungsgemäße Regelung der Zuströmung der Frischluft bei durch den Kolben geöffneten Einlaßöffnungen (beispielsweise Einlaßschlitze, Bohrungen oder Langlöcher) eine nur vom Motorbetriebspunkt abhängige Vielzahl von Variationsmöglichkeiten gegeben ist. So kann der Drall in Abhängigkeit der Volumenstromänderung oder bei konstantem Volumenstrom reguliert, die Motorlauffähigkeit im Saugbetrieb besser gewährleistet und eine Reduzierung des Spüldruckbedarfs erreicht werden. Durch die variable Regulierung des Dralls und des Volumenstroms der zugeführten Frischluft ist eine wesentliche Reduzierung des Kraftstoffverbrauchs und eine erhebliche Verminderung der Schadstoffemissionen der Brennkraftmaschine erreichbar.

Durch die an den einzelnen Spülluftöffnungen angeordneten Mittel zur Beeinflussung des Dralls und zur Regelung des jeweiligen Zuströmquerschnittes der einzelnen Spülluftöffnungen ist eine besonders variable Regulierung des Dralls und des Volumenstroms der Frischluftströmung möglich. Der Volumenstrom und der Drall der zugeführten Frischluft ist beispielsweise in Abhängigkeit des Motorbetriebspunktes regelbar. Durch die vorschlagsgemäße Regulierung des Dralls und des Volumenstroms der zugeführten Frischluft ist eine weitere Reduzierung des Kraftstoffverbrauchs und eine erhebliche Verminderung der Schadstoffemissionen der Brennkraftmaschine erreichbar.

Dadurch, daß die unterste Einlaßreihe der Spülluftöffnungen eine Kolbenoberkante des Kolbens in UT-Stellung unterschreitet, wird auf baulich besonders einfache Weise erreicht, daß eine Kühlung der thermisch stark belasteten Kolbenoberkante nebst Feuersteg erfolgt.

Durch die erfindungsgemäße Ausgestaltung nach Anspruch 2 kann eine variierbare Abgasrückhaltung ohne Nachteile im Drall realisiert sowie eine Einflußnahme auf die axiale Geschwindigkeitsverteilung als Randbedingung auf die Zylinderinnenströmung in Kompressions- und Gemischbildungsphase genommen werden. Dabei ist es besonders vorteilhaft, wenn die Öffnungen der unteren der beiden Einlaßreihen radial und die Öffnungen der oberen Einlaßreihe tangential in den Zylinder einmünden, da die Steuerzeiten für die obere Einlaßreihe länger sind als für die untere Einlaßreihe und somit ein erhöhter Grunddrall auf die Frischluftladung, die durch die obere Einlaßreihe strömt, gegeben werden kann.

Die Ausgestaltung der Erfindung nach Anspruch 3 bietet eine weitere Flexibilität hinsichtlich der Beeinflussungsmöglichkeiten der Frischluftzuströmung. So können beispielsweise zwei Einlaßreihen mit in unterschiedlichem Winkel in den Zylinder einmündenden Spülluftöffnungen vorgesehen sein, sodaß mit jeder Einlaßreihe ein unterschiedlicher Drall der einströmenden Frischluft erreichbar ist.

Die erfindungsgemäße Ausgestaltung nach Anspruch 4 ist eine bevorzugte bauliche Ausführung der Erfindung. Dabei sind die Spülluftöffnungen jeder Einlaßreihe am Umfang des Zylinders angeordnete Bohrungen, wobei die Bohrungen der oberen Einlaßreihe tangential und die Bohrungen der unteren Einlaßreihe radial bzw. von der Radialrichtung nur leicht ausgelenkt (leicht tangential) zum Zylinder verlaufen.

Bei der Ausführung der Mittel als stufenlos regelbare schwenkbare Leitflügel gemäß Anspruch 5 wird eine hohe Flexibilität der Regulierung der Frischluftzuströmung erreicht. Es besteht die Möglichkeit, mittels der Leitflügel den Zuströmquerschnitt der Spülluftöffnungen unabhängig von der Stellung des Kolbens zu verriegeln.

Die erfindungsgemäße Ausgestaltung nach Anspruch 6 ist eine besonders einfache und kostengünstige Bauausführung der Erfindung, wobei bei dieser Ausführungsform in erster Linie der Zuströmquerschnitt weitgehend unabhängig von der Stellung des Kolbens geregelt wird.

Weitere Ausgestaltungen und Vorteile der Erfindung gehen aus den übrigen Unteransprüchen und der Beschreibung hervor.

In der Zeichnung ist die Erfindung anhand dreier Ausführungsbeispiele näher erläutert. Es zeigen:
- Fig. 1: in einem ersten Ausführungsbeispiel eine schematische Schnittdarstellung eines Einlaßsystems einer nicht näher dargestellten Zweitakt-Brennkraftmaschine, wobei der Schnitt in einer Meridianebene des Zylinders liegt und das Einlaßsystem zwei strömungsmäßig voneinander getrennte Zuströmebenen aufweist, die jeweils in einer Einlaßreihe mit Spülluftöffnungen in den Zylinder münden,
- Fig. 2: einen Schnitt II - II von Fig. 1,
- Fig. 3: in einem zweiten Ausführungsbeispiel eine schematische Schnittdarstellung eines Einlaßsystems analog zu Fig. 1, wobei im Bereich von in dem Zylinder angeordneten Spülluftöffnungen Mittel zur Beeinflussung des Dralls der zugeführten Frischluft und zur Regelung des Volumenstromes der Frischluft angeordnet sind,
- Fig. 4: in einem Schnitt IV - IV von Fig. 3 ein konzentrisch zum Zylinder angeordneter, den Spülluftöffnungen einer ersten Einlaßreihe bzw. Zuströmebene zugeordneter, verdrehbarer Ring mit auf den Umfang verteilten Öffnungen zur Regelung des Zuströmquerschnittes,
- Fig. 5: in einem Schnitt V - V von Fig. 3 einen zweiten, zum Ring aus Fig. 2 baugleichen, konzentrisch zum Zylinder angeordneten, verdrehbaren Ring für eine zweite Einlaßreihe bzw. Zuströmebene, in einer Position, in der die Spülluftöffnungen vollständig verschlossen sind,
- Fig. 6: in einem dritten Ausführungsbeispiel die als Leitflügel ausgeführten Mittel zur Beeinflussung des Dralls und zur Regelung des Volumenstroms der zugeführten Frischluft, wobei die Leitflügel in einer geöffneten Position dargestellt sind,
- Fig. 7: eine Darstellung analog zu Fig. 6 mit den Leitflügeln in geschlossener Position (Verriegelung der Zuströmung) und
- Fig. 8: einen Teil einer Abwicklung der zwei Einlaßreihen gemäß Fig. 1.

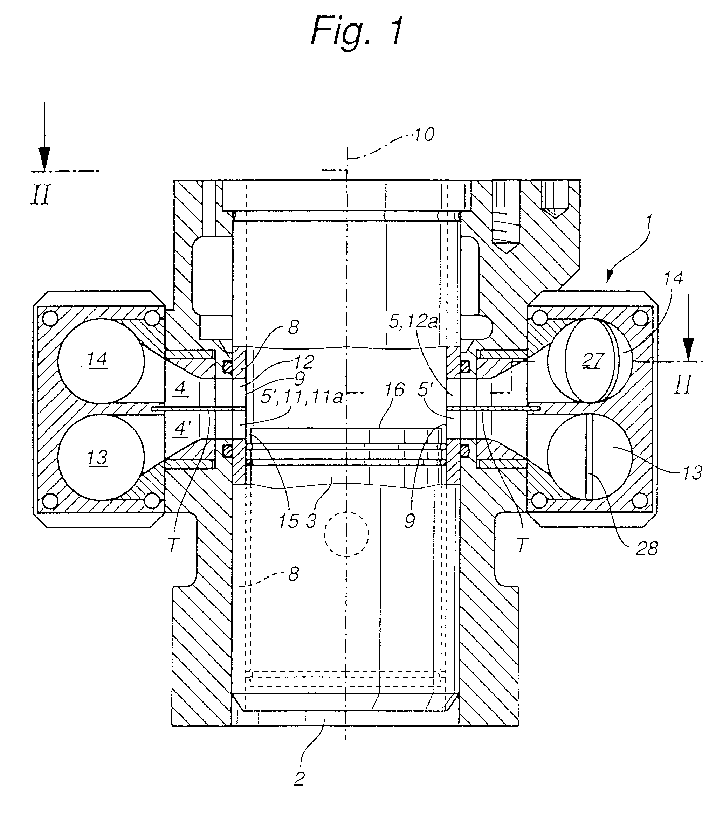

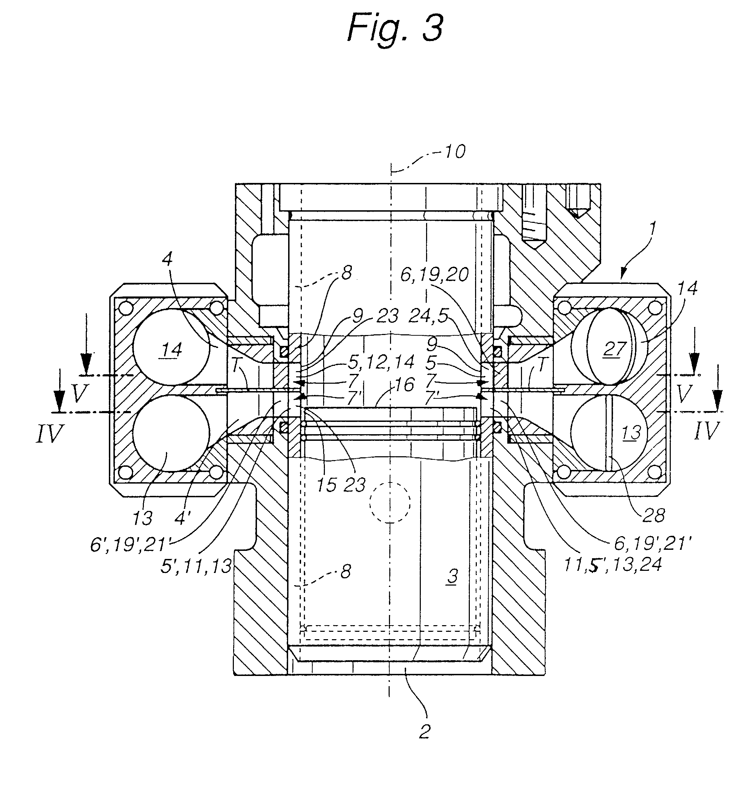

Die Fig. 1 und 3 zeigen in zwei Ausführungsbeispielen eine schematische Schnittdarstellung eines Einlaßsystems 1 einer nicht näher dargestellten Zweitakt-Brennkraftmaschine mit einem Zylinder 2, einem Kolben 3 und Spülluftkanälen 4, 4' nebst Spülluftöffnungen 5, 5'. Der Schnitt liegt in einer Meridianebene des Zylinders 2.

Der Zylinder 2 besitzt eine Zylinderlauffläche 8, wobei die Zufuhr von Spülluft in den Zylinder 2 über zylinderlaufflächenseitige Öffnungen 9 der Spülluftöffnungen 5, 5' von dem in diesem hin- und herbeweglichen Kolben 3 gesteuert wird.

Die Spülluftöffnungen 5,5' sind in Zylinderlängsachse 10 betrachtet in zwei Einlaßreihen 11 und 12 übereinander angeordnet, wobei die Einlaßreihe 11 einer Zuströmebene 13 und die Einlaßreihe 12 einer Zuströmebene 14 zugeordnet ist. Die Spülluftöffnungen 5 sind der Einlaßreihe 12, und die Spülluftöffnungen 5' sind der Einlaßreihe 11 zugeordnet.

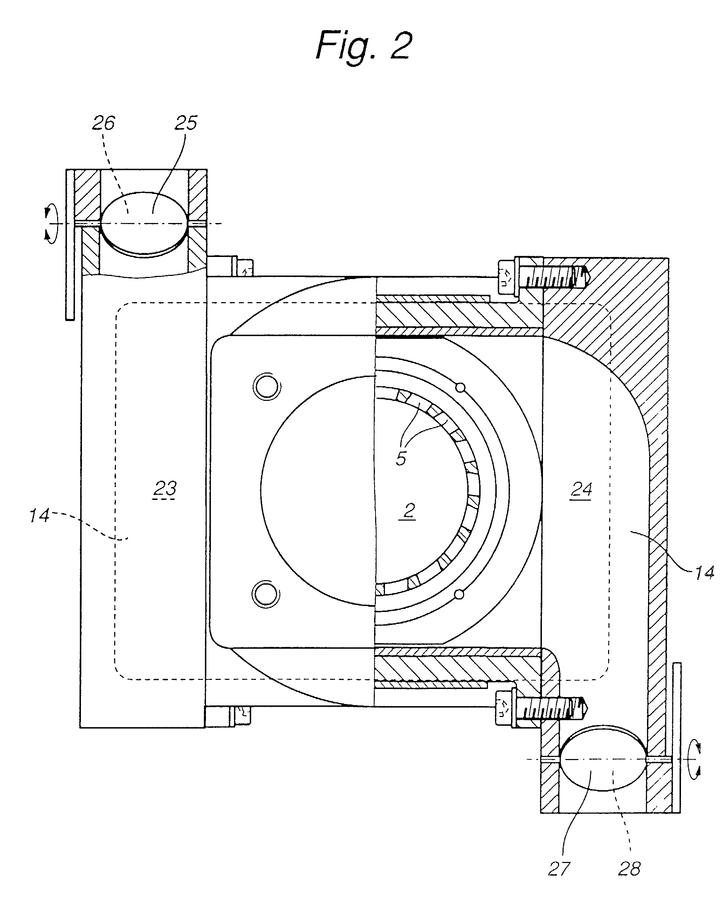

Die beiden Zuströmebenen 13, 14 sind benachbart angeordnet und durch eine Trennebene T (siehe Fig. 1, 3 und 8) strömungsmäßig voneinander getrennt ausgebildet, wobei jede Zuströmebene 13, 14 unten näher beschriebene eigene Steuerorgane 25, 26 bzw. 27, 28 (z.B. Drosselklappen, siehe Fig. 2) aufweist. Die Trennebene T kann beispielsweise eine Metall- oder Kunststoffplatte umfassen (siehe Fig. 1 und 3), die an einer zwischen den beiden Kanälen 13, 14 liegenden Wand befestigt ist und in einen im Zylinderkurbelgehäuse angeordneten Ringspalt bis zu einer Zylinderlaufbüchse (Zylinder 2) hineinragt, sodaß zwei übereinander liegende Spülluftkanäle 4 und 4' gebildet werden. Die Metall- oder Kunststoffplatte ist an einem Steg, der die beiden Einlaßreihen 11 und 12 in der Zylinderlaufbüchse in Richtung der Zylinderlängsachse trennt, anschlagbar, sodaß die Trennebene T von besagter Wand, besagter Metall- oder Kunststoffplatte und dem Steg gebildet ist.

Über die Zuströmebene 13 wird die Einlaßreihe 11 und über die Zuströmebene 14 die Einlaßreihe 12 im Zylinder 2 mit Frischladung (Frischluft) versorgt. In Fig. 1 sind die Drosselklappen 27 und 28 in verschiedenen Öffnungspositionen gezeigt, wobei die Drosselklappe 27 teilweise geöffnet und die Drosselklappe 28 vollständig geöffnet dargestellt ist. Die Verstellung der Drosselklappen 25-28 erfolgt in prinzipiell bekannter Weise über einen nicht dargestellten elektrischen oder mechanischen Steller.

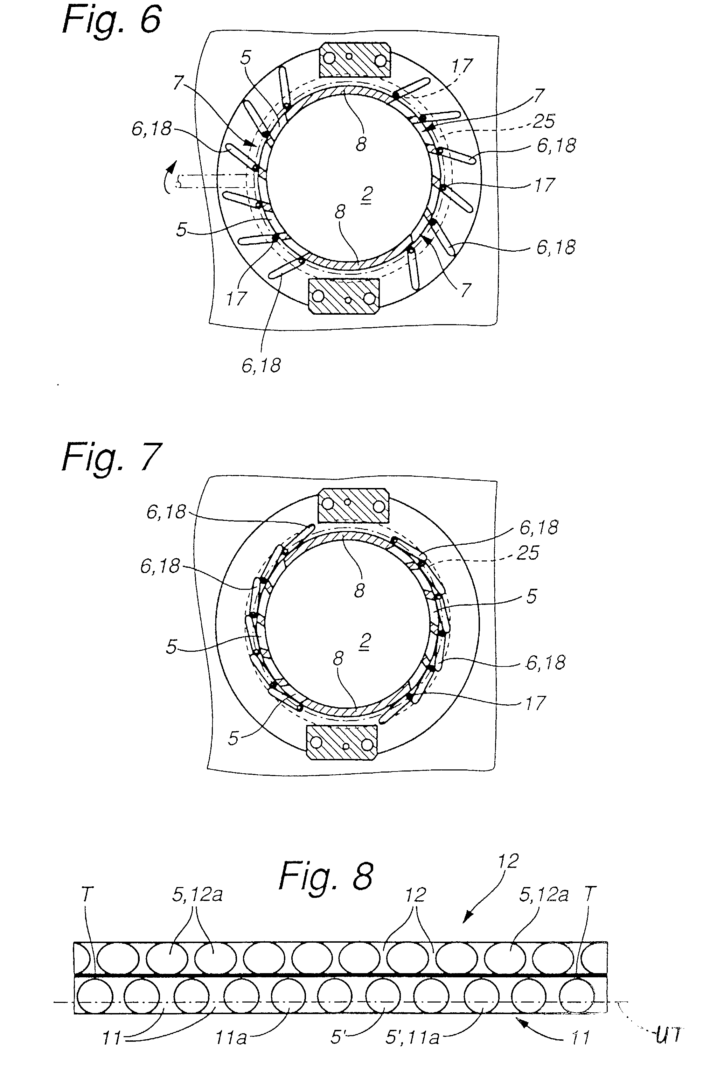

In Fig. 1 münden die strömungsmäßig getrennten Zuströmebenen 13, 14 direkt in die Einlaßreihen 11, 12, wobei die Spülluftöffnungen 5,5' jeder Einlaßreihe 11, 12 gleichmäßig am Umfang des Zylinders 2 angeordnete Bohrungen 11a, 12a (siehe Fig. 8) sind.

Die Spülluftöffnungen 5, 5' der Einlaßreihen 11, 12 besitzen eine unterschiedliche Einlaßgeometrie derart, daß zur Beeinflussung einer Abgasrückhaltung im Zylinder 2 in der Einlaßreihe 11 die Zuströmung in den Zylinder 2 radial und in der Einlaßreihe 12 tangential erfolgt (die Bohrungen 11a der Einlaßreihe 11 verlaufen radial und die Bohrungen 12a der Einlaßreihen 12 tangential zum Zylinder 2).

In einer nicht dargestellten Ausführungsform der Erfindung können in jeder Zuströmebene 13, 14 auch zwei oder mehrere in Richtung der Zylinderlängsachse 10 übereinander angeordnete Einlaßreihen 11 bzw. 12 vorgesehen sein.

Prinzipiell ist die Anordnung der radial und tangential zum Zylinder 2 ausgerichteten Bohrungen 11a bzw. 12a beliebig. Es ist aber besonders mit Blick auf eine möglichst geringe Abgasrückhaltung im Zylinder vorteilhaft, wenn die Öffnungen 5' der unteren der beiden Einlaßreihen 11, 12 radial und die Öffnungen 5 der oberen Einlaßreihe 12 tangential in den Zylinder einmünden, da die Steuerzeiten für die obere Einlaßreihe 12 länger sind als für die untere Einlaßreihe 11 und somit ein erhöhter Grunddrall auf die Frischluftladung, die durch die obere Einlaßreihe 12 strömt, gegeben werden kann.

Wie in den Fig. 1 und 3 dargestellt ist, unterschreitet zwecks Kühlung eines Feuersteges 15 des Kolbens 3 die unterste Einlaßreihe 11 der Spülluftschlitze 5 definiert eine Kolbenoberkante 16 des Kolbens 3 in seiner UT-Stellung. Der Kolben 3 ist in Fig. 1 und 3 in UT-Stellung dargestellt. Die UT-Position des Kolbens 3 bezüglich der Einlaßreihen 11, 12 ist auch in Fig. 8 schematisch dargestellt.

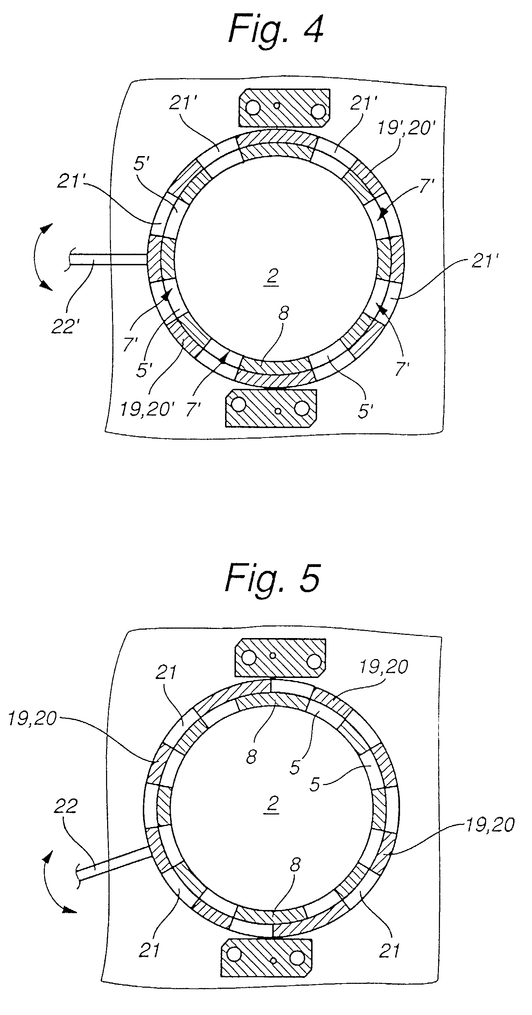

Gemäß Fig. 1 und 2 sind die beiden in Richtung der Zylinderachse 10 übereinander und benachbart angeordneten und strömungsmäßig getrennten Zuströmebenen 13 und 14 in zwei diametral gegenüberliegende Zuströmeinheiten 23 und 24 aufgeteilt, wobei die Zuströmeinheit 23 je eine Hälfte der strömungsmäßig getrennten Zuströmebenen 13 und 14 und die andere Zuströmeinheit 24 die jeweils andere Hälfte der Zuströmebenen 13 und 14 umfaßt. Somit umfaßt die Zuströmeinheit 23 (gemäß Fig. 3 und 4) die linke Hälfte und die Zuströmeinheit 24 die rechte Hälfte der Zuströmebenen 13 und 14.

In Fig. 2 ist ein Schnitt II - II von Fig. 1 mit den beiden diametral gegenüberliegenden Zuströmeinheiten 23 und 24 dargestellt. Für gleiche Bauteile aus den Fig. 1 und 3 werden gleiche Bezugszeichen verwendet.

Jede der Zuströmeinheiten 23 und 24 besitzt jeweils zwei Steuerorgane (Drosselklappen) 25, 26 (Zuströmebene 23) und 27, 28 (Zuströmebene 24). Der Volumenstrom in jeder Hälfte der Zuströmebene 13, 14 der Zuströmeinheit 23 ist über ein eigenes Steuerorgan (Drosselklappe) 25 bzw. 26 regelbar. Ebenso ist der Volumenstrom in jeder Hälfte der Zuströmebene 13, 14 der Zuströmeinheit 24 über ein eigenes Steuerorgan (Drosselklappe) 27 bzw. 28 regelbar. Die Regelung der Steuerorgane 25-28 erfolgt in Abhängigkeit des Motorbetriebspunktes beispielsweise über ein Motorkennfeld, wobei jedes Steuerorgan 25-28 unabhängig von den jeweils anderen regelbar ist, sodaß mit den Steuerorganen 25-28 die Zuströmung von Spülluft zu den Einlaßreihen 11, 12 jeder Zuströmebene 13, 14 für jede Zuströmeinheit 23 und 24 separat regelbar ist.

Die Zuströmung zu den Zuströmeinheiten 23 und 24 erfolgt zunächst in jeweils einem Strömungskanal. Stromauf der Steuerorgane 25 und 26 in der Zuströmeinheit 23 bzw. der Steuerorgane 27 und 28 in der Zuströmeinheit 24 befindet sich jeweils ein nicht näher dargestellter Stutzen, der den Strömungskanal der Zuströmeinheit 23 bzw. 24 in zwei Teile teilt. Der Stutzen fungiert somit als Strömungsteiler, sodaß stromab des Stutzens und insbesondere stromab der Steuerorgane 25 und 26 bzw. 27 und 28 die Frischluft bis zu den Einlaßreihen 11 bzw. 12 strömungsmäßig getrennt ist.

In Fig. 3 sind im Bereich der in dem Zylinder 2 angeordneten und an dessen Umfang verteilten radialen und/oder tangentialen Spülluftöffnungen 5, 5' erfindungsgemäße Mittel 6 (siehe Fig. 4 bis 7) zur Beeinflussung des Dralls der zugeführten Frischluft und zur Regelung des Volumenstroms im Bereich eines Zuströmquerschnittes 7, 7' der Frischluft angeordnet. Dabei können die Spülluftöffnungen 5, 5' über den gesamten Umfang gleichmäßig verteilt ausgeführt oder, in einer bevorzugten Bauausführung, nur jeweils auf einem Abschnitt des Umfangs angeordnet sein, während der verbleibende Abschnitt des Umfangs keine Spülluftöffnungen aufweist. Letztere Ausführung dient vor allem dazu, bei Motoren in Reihenausführung den Abstand zwischen den Zylindern möglichst gering zu halten.

In Fig. 4 ist ein Schnitt IV - IV von Fig. 3 dargestellt. Das Mittel 6 zur Regelung des Zuströmquerschnittes 7' der Spülluftöffnungen 5' ist ein der ersten Einlaßreihe 11 bzw. der ersten Zuströmebene 13 zugeordneter, konzentrisch zum Zylinder 2 angeordneter, verdrehbarer Ring 19' mit einer Ringwand 20' in der auf deren Umfang verteilte Löcher 21' angeordnet sind. Die Löcher 21' sind im gezeigten Ausführungsbeispiel Bohrungen, können aber auch als Schlitze oder Langlöcher ausgeführt sein. Gleiche Bauteile aus Fig. 1 sind mit gleichen Bezugszeichen gekennzeichnet. In einer nicht dargestellten Ausführung kann durch eine geeignete Gestaltung der Löcher 21' der Drall der zuströmenden Frischluft beeinflußt werden, wie beispielsweise durch eine bezüglich der Wand der jeweiligen Spülluftöffnung 5' etwas schräg verlaufende Lochwand des dieser Spülluftöffnung 5' zugeordneten Loches 21' im Ring 19'.

Die Löcher 21' des Ringes 19' sind derart angeordnet, daß diese zur vollständigen Öffnung des Zuströmquerschnittes 7' in einer ersten Position des Ringes 19' kongruent zu den Spülluftöffnungen 5' liegen (siehe Fig. 4) und zur vollständigen Abriegelung des Zuströmquerschnittes 7' in einer zweiten Position des Ringes 19' die Ringwand 20' über den Zuströmquerschnitt 7' schiebbar ist (entspricht der Darstellung in Fig. 5). Der Zuströmquerschnitt 7 der Spülluftöffnungen 5' ist mit dem Ring 19' zwischen der vollständig geöffneten Position und der vollständig abgeriegelten Position stufenlos regelbar, beispielsweise mit einer in Fig. 4 schematisch dargestellten Führungsstange 22', die an der Ringwand 20' befestigt ist und mit der der Ring 19' in die mit Pfeilen dargestellten Richtungen verdrehbar ist.

Fig. 5 zeigt einen Schnitt V - V aus Fig. 3. Das Mittel 6 zur Regelung des Zuströmquerschnittes 7 der Spülluftöffnungen 5 ist ein zweiter, der zweiten Einlaßreihe 12 bzw. der zweiten Zuströmebene 14 zugeordneter, konzentrisch zum Zylinder 2 angeordneter, verschieblicher Ring 19 mit einer Ringwand 20 in der auf deren Umfang verteilte Löcher 21 angeordnet sind. Der verdrehbare Ring 19 ist in einer Position dargestellt, in der die Spülluftöffnungen 5 der zweiten Einlaßreihe 12 vollständig verschlossen sind. Der Ring 19 aus Fig. 5 ist baugleich mit dem Ring 19' aus Fig. 4. Gleiche Bauteile aus Fig. 1 sind mit gleichen Bezugszeichen gekennzeichnet.

Gemäß Fig. 6 und 7 sind die Mittel 6 zur Regelung des Zuströmquerschnittes 7 den Spülluftöffnungen 5 zugeordnete und um eine Achse 17 schwenkbare Leitflügel 18, wobei diese derart verschwenkbar sind, daß der Zuströmquerschnitt 7 der Spülluftöffnungen 5 stufenlos regelbar und bis auf Spaltströme vollständig abriegelbar ist. In den Fig. 6 und 7 ist lediglich ein Querschnitt durch eine der Zuströmebenen 13 bzw. 14 gezeigt. Gleiche Bauteile aus Fig. 3 sind mit gleichen Bezugszeichen gekennzeichnet. Die Leitflügel 18 sind über einen prinzipiell bekannten, konzentrisch zum Zylinder 2 verdrehbaren und strichliert eingezeichneten Stellring schwenkbar. Jeder Leitflügel 18 besitzt dabei einen nicht dargestellten Führungsbolzen, der in eine am Umfang des Stellrings angeordnete Aufnahme eingreift. Bei Verdrehung des Stellrings werden die Führungsbolzen der Leitflügel 18 mitgenommen und die jeweilige Leitschaufel 18 um deren Schwenkachse 17 verdreht.

In einer Ausführung der Erfindung sind die Leitflügel zur Beeinflussung des Dralls der zuströmenden Frischluft den Spülluftöffnungen zugeordnete feststehende oder schwenkbare Leitschaufeln, durch dessen Profilierung und/oder Schwenkstellung der Drall der zuströmenden Frischluft besonders wirksam beeinflußbar ist.

In einer bevorzugten Ausführung der Erfindung sind in der Einlaßreihe 12 die in Fig. 6 und 7 beschriebenen Leitflügel 18 (in erster Linie Beeinflussung des Dralls der zugeführten Frischluft) vorgesehen, wohingegen sich in der unteren Einlaßreihe 11 der in Fig. 4 beschriebene Ring 19' (in erster Linie Beeinflussung des Volumenstroms der zugeführten Frischluft) befindet. Somit kann über die prinzipbedingt längeren Steuerzeiten für die obere Einlaßreihe 12, wie schon oben erwähnt, ein erhöhter Grunddrall auf die durch diese strömende Frischluft gegeben werden.

In Fig. 8 ist ein Teil einer Abwicklung der zwei Einlaßreihen 11, 12 aus Fig. 1 gezeigt, wobei eine Position UT der Kolbenoberkante im unteren Totpunkt des Kolbens 3 angedeutet ist. Die Spülluftöffnungen 5, 5' jeder Einlaßreihe 11,12 sind gleichmäßig am Umfang des Zylinders 2 angeordnete Bohrungen 11a, 12a, wobei die Bohrungen 11a der unteren Einlaßreihe 11 radial und die Bohrungen 12a der oberen Einlaßreihe 12 tangential zum Zylinder 2 verlaufen.

In einer weiteren Ausführung der Erfindung ist es natürlich auch möglich, daß die Spülluftöffnungen der Einlaßreihen eine unterschiedliche Einlaßgeometrie derart aufweisen, daß die Zuströmung in den Zylinder in der unteren Einlaßreihe tangential und in der oberen Einlaßreihe radial erfolgt oder daß beide Einlaßreihen in etwa die gleiche Einlaßgeometrie aufweisen.

Die Erfindung ist in den gezeigten Ausführungsbeispielen mit zwei Zuströmebenen dargestellt. Selbstverständlich können die Mittel zur Beeinflussung des Dralls und/oder zur Steuerung des Volumenstroms der Frischluft, sowohl bei der Ausführung mit Leitflügeln als auch bei der Ausführung mit verdrehbarem Ring, auch bei Einlaßsystemen mit nur einer Zuströmeinheit vorgesehen sein. Desweiteren ist die Erfindung natürlich für ZweitaktBrennkraftmaschinen mit und ohne separate Spülluftpumpe einsetzbar.

## Patentansprüche

1. Einlaßsystem (1) für eine Zweitakt-Brennkraftmaschine mit Spülluftkanälen (4, 4') und mindestens einem Zylinder (2), an dessen Umfang verteilte radiale und/oder tangentiale Spülluftöffnungen (5, 5') in mindestens zwei Einlaßreihen (11, 12) angeordnet sind, die mindestens zwei voneinander getrennten Zuströmebenen (13, 14) zugeordnet sind, wobei eine zylinderlaufflächenseitige Öffnung der Spülluftöffnungen (5, 5') und die Zufuhr von Spülluft in den Zylinder mindestens von einem in diesem hin- und herbeweglichen Kolben (3) gesteuert wird, wobei jede Zuströmebene (13,14) mindestens ein eigenes Steuerorgan (25,26;27,28) zur Regelung der Zuströmung von Spülluft zu den Einlaßreihen (11,12) aufweist und wobei die Steuerorgane (25,26;27,28) in Abhängigkeit vom Motorbetriebspunkt regelbar sind,
**dadurch gekennzeichnet,**
daß mindestens an einzelnen Spülluftöffnungen (5,5') Mittel (6) zur Beeinflussung des Dralls und zur Regelung des jeweiligen Zuströmquerschnittes (7,7') der einzelnen Spülluftöffnungen (5,5') angeordnet sind und daß zwecks Kühlung eines Feuersteges (15) des Kolbens (3) die unterste Einlaßreihe (11) der Spülluftöffnungen (5') eine Kolbenoberkante (16) des Kolbens (3) in UT-Stellung unterschreitet.

2. Einlaßsystem nach Anspruch 1,
**dadurch gekennzeichnet,**
daß die Spülluftöffnungen (5,5') der Einlaßreihen (11,12) eine unterschiedliche Einlaßgeometrie derart aufweisen, daß zur Beeinflussung einer Abgasrückhaltung im Zylinder (2) in der Einlaßreihe (11) die Zuströmung in den Zylinder (2) radial und in der anderen Einlaßreihe (12) tangential erfolgt.

3. Einlaßsystem nach Anspruch 1 oder 2,
**dadurch gekennzeichnet,**
daß mindestens in einer der beiden Zuströmebenen (13,14) zwei oder mehrere in Richtung der Zylinderlängsachse (10) übereinander angeordnete Einlaßreihen (11) zugeordnet sind.

4. Einlaßsystem nach einem der Ansprüche 1 bis 3,
**dadurch gekennzeichnet,**
daß die Spülluftöffnungen (5,5') jeder Einlaßreihe (11,12) am Umfang des Zylinders (2) angeordnete Bohrungen (11a,12a) sind, wobei die Bohrungen (12a) der oberen Einlaßreihe (12) tangential und die Bohrungen (11a) der unteren Einlaßreihe (11) radial und/oder tangential zum Zylinder (2) verlaufen.

5. Einlaßsystem nach Anspruch 1,
**dadurch gekennzeichnet,**
daß die Mittel (6) zur Regelung des Zuströmquerschnittes (7,7') den Spülluftöffnungen (5) zugeordnete und um eine Achse (17) schwenkbare Leitflügel (18) sind, wobei diese derart verschwenkbar sind, daß der Zuströmquerschnitt (7,7') der Spülluftöffnungen (5,5') stufenlos regelbar und bis auf Spaltströme vollständig abriegelbar ist.

6. Einlaßsystem nach Anspruch 1,
**dadurch gekennzeichnet,**
daß das Mittel (6) zur Regelung des Zuströmquerschnittes (7,7') ein den Spülluftöffnungen (5,5') zugeordneter, konzentrisch zum Zylinder (2) angeordneter, verschieblicher Ring (19, 19') mit einer Ringwand (20,20') ist, in der auf deren Umfang verteilte Löcher (21,21') angeordnet sind.

7. Einlaßsystem nach Anspruch 6,
**dadurch gekennzeichnet,**
daß die Löcher (21,21') des Ringes (19,19') derart angeordnet sind, daß diese zur vollständigen Öffnung des Zuströmquerschnittes (7,7') in einer ersten Position des Ringes (19,19') kongruent zu den Spülluftöffnungen (5,5') liegen und zur vollständigen Abriegelung des Zuströmquerschnittes (7,7') in einer zweiten Position des Ringes (19,19') die Ringwand (20,20') über den Zuströmquerschnitt (7,7') schiebbar ist, wobei dieser mit dem Ring (19,19') zwischen der vollständig geöffneten Position und der vollständig abgeriegelten Position stufenlos regelbar ist.

8. Einlaßsystem nach einem der Ansprüche 1 bis 7,
**dadurch gekennzeichnet,**
daß der Zylinder (2) von zwei diametral gegenüberliegend angeordneten Zuströmeinheiten (23,24) mit Frischluft versorgt wird, wobei die Zuströmeinheiten (23,24) strömungsmäßig voneinander getrennt sind und jede Zuströmeinheit (23,24) jeweils eine Hälfte der Zuströmebenen (13,14) umfaßt, wobei für jede Hälfte der Zuströmebene (13,14) in den jeweiligen Zuströmeinheiten (23,24) ein eigenes Steuerorgan (25-28) zur Steuerung der Zuströmung der Frischluft angeordnet ist.

## Claims

1. An intake system (1) for a two-stroke internal combustion engine with scavenge air channels (4, 4') and at least one cylinder (2) around the circumference of which are positioned in at least two intake rows (11, 12) radial and/or tangential scavenge air openings (5, 5') which are connected to at least two separate supply levels (13, 14), whereby the opening on the cylinder face side of the cylinder of the scavenge air openings (5, 5') and the supply of scavenge air to the cylinder are controlled by at least one piston (3) which can move back and forth in the cylinder, whereby each supply level (13, 14) has at least one independent control organ (25, 26; 27, 28) to control the supply of scavenge air to the intake rows (11, 12), and whereby the control organs (25, 26; 27, 28) can be adjusted in accordance with the engine operating point,
**characterised in that**
at at least individual scavenge air openings (5, 5') means (6) are provided to influence the swirl and to regulate the supply cross sections (7, 7') of the individual scavenge air openings (5, 5'), and that for the purpose of cooling a head land (15) on the piston (3) the lower intake row (11) of the scavenge air openings (5') falls short of an upper edge (16) of the piston (3) at BDC.

2. An intake system in accordance with Claim 1,
**characterised in that,**
the scavenge air openings (5, 5') in the intake rows (11, 12) are of varying intake geometry such that, in order to influence exhaust gas retention in the cylinder (2), in one intake row (11) the supply to the cylinder (2) is radial and in the other intake row (12) it is tangential.

3. An intake system in accordance with Claim 1 or 2,
**characterised in that,**
at at least one of the two supply levels (13, 14) two or more intake rows (11) are positioned one above the other and running in the direction of the longitudinal axis of the cylinder (10).

4. An intake system in accordance with one of Claims 1 to 3,
**characterised in that,**
the scavenge air openings (5, 5') in each intake row (11, 12) are holes (11a, 12a) positioned around the circumference of the cylinder (2), whereby the holes (12a) in the upper intake row (12) run tangentially and the holes (11a) in the lower intake row (11) run radially and/or tangentially to relation to the cylinder (2).

5. An intake system in accordance with Claim 1,
**characterised in that,**
the means (6) of regulating the supply cross section (7, 7') are guide vanes (18) connected to the scavenge air openings (5) which can rotate about an axis (17), whereby they can be rotated in such a way that the supply cross sections (7, 7') of the scavenge air openings (5, 5') are infinitely variable and fully closable to the extent that separeate supplies can be produced.

6. An intake system in accordance with Claim 1,
**characterised in that,**
the means (6) of regulating the supply cross section (7, 7') is a movable ring (19, 19') which is connected to the scavenge air openings (5, 5') and positioned concentrically in relation to the cylinder (2), with a ring wall (20, 20') which has holes (21, 21') positioned around its circumference.

7. An intake system in accordance with Claim 6,
**characterised in that,**
the holes (21, 21') in the ring (19, 19') are positioned such that in a first ring (19, 19') position, in which the supply cross sections (7, 7') are fully opened, they lie congruent to the scavenge air openings (5, 5') and in a second ring (19, 19') position, in which the supply supply cross sections (7, 7') are fully closed, the ring wall (20, 20') can be pushed over the cross section (17, 17'), whereby the latter can be varied infinitely between the fully opened position and the fully closed position with the ring (19, 19').

8. An intake system in accordance with one of Claims 1 to 7,
**characterised in that,**
the cylinder (2) is supplied with fresh air by two diametrically opposed supply units (23, 24), whereby the flows from the two supply units (23, 24) are separate from one another and each supply unit (23, 24) covers half of the supply levels (13, 14), whereby a separate control organ (25-28) to control the supply of fresh air is positioned in the particular supply units (23, 24) for each half of the supply level (13, 14).

## Revendications

1. Système d'admission (1) pour un moteur en combustion interne à deux temps, avec des canaux d'air de balayage (4, 4') et au moins un cylindre (2), sur la périphérie duquel sont disposées des ouvertures d'air de balayage (5, 5') radiales et/ou tangentielles, réparties en au moins deux rangées d'admission (11, 12), associées à deux plans d'écoulement d'arrivée (13, 14) séparés l'un de l'autre, une ouverture des ouvertures de balayage (5, 5') qui est située du côté de la glace du cylindre et l'amenée d'air de balayage dans le cylindre étant commandées au moins par un piston (3) susceptible d'être déplacé dans un sens et dans l'autre dans celui-ci, chaque plan d'écoulement d'arrivée (13, 14) présentant au moins un organe de commande (25, 26; 27, 28) propre, pour assurer la régulation de l'écoulement d'alimentation en air de balayage vers les rangées d'admission (11, 12), et les organes de commande (25, 26; 27, 28) étant réglables en fonction du point de fonctionnement du moteur, caractérisé en ce que, au moins sur des ouvertures d'air de balayage (5, 5') individuelles, sont disposés des moyens (6) destinés à influer sur la rotation et à assurer la régulation de la section transversale d'écoulement d'alimentation (7, 7') respectif des différentes ouvertures d'air de balayage (5, 5'), et en ce que, dans le but de refroidir une nervure exposée au feu (15) du piston (3), la rangée d'admission (11) la plus basse des ouvertures d'air de balayage (5') reste au-dessous d'une arête supérieure de piston (16) appartenant au piston (3), dans la position de point mort bas.

2. Système d'admission (1) selon la revendication 1, caractérisé en ce que les ouvertures d'air de balayage (5, 5') des rangées d'admission (11, 12) présentent une géométrie d'admission différente, de manière que, pour influer sur une retenue des gaz d'échappement dans le cylindre (2), dans la rangée d'admission (11), l'écoulement d'alimentation dans le cylindre (2) s'effectue radialement et, dans l'autre rangée d'admission (12), il s'effectue tangentiellement.

3. Système d'admission selon la revendication 1 ou 2, caractérisé en ce qu'au moins dans l'un des deux plans d'alimentation (13, 14), sont associées deux rangées d'admission (11, 12) ou plus, disposées les unes au-dessus des autres dans la direction de l'axe longitudinal (10) du cylindre.

4. Système d'admission selon l'une des revendications 1 à 3, caractérisé en ce que les ouvertures d'air de balayage (5, 5') de chaque rangée d'admission (11, 12) sont des perçages (11a, 12a) disposés sur la périphérie du cylindre (2), les perçages (12a) de la rangée d'admission supérieure s'étendant tangentiellement et les perçages (11a) de la rangée d'admission inférieure (11) s'étendant radialement et/ou tangentiellement par rapport au cylindre (2).

5. Système d'admission selon la revendication 1, caractérisé en ce que les moyens (6) de régulation de la section transversale d'écoulement d'alimentation (7, 7') sont des ailettes de guidage (18), associées aux ouvertures d'air de balayage (5) et susceptibles de pivoter autour d'un axe (17), ces ailettes étant susceptibles de pivoter de manière que la section transversale d'écoulement d'alimentation (7, 7') des ouvertures d'air de balayage (5, 5') soit réglable de façon progressive continue et puisse être bloquée jusqu'à apparition d'écoulements d'interstice.

6. Système d'admission selon la revendication 1, caractérisé en ce que le moyen (6) de régulation de la section transversale d'écoulement d'alimentation (7, 7') est un anneau (19, 19') mobile, associé aux ouvertures d'air de balayage (5, 5'), disposé concentriquement par rapport au cylindre (2), avec une paroi annulaire (20, 20') dans laquelle des trous (21, 21') sont ménagés, répartis sur sa périphérie.

7. Système d'admission selon la revendication 6, caractérisé en ce que les trous (21, 21') de l'anneau (19, 19') sont disposés de manière qu'ils soient disposés de façon congruente aux ouvertures d'air de balayage (5, 5') dans une première position de l'anneau (19, 19'), pour assurer l'ouverture complète de la section transversale d'écoulement d'alimentation (7, 7'), et la paroi annulaire (20, 20') étant déplaçable sur la section transversale d'écoulement d'alimentation (7, 7'), pour assurer le blocage complet de la section transversale d'écoulement d'alimentation (7, 7'), lorsque l'anneau (19, 19') est dans une deuxième position, cette section étant réglable de façon progressive continue, à l'aide de l'anneau (19, 19'), entre une position complètement ouverte et la position complètement bloquée.

8. Système d'admission selon l'une des revendications 1 à 7, caractérisé en ce que le cylindre (2) est alimenté en air neuf par deux unités d'écoulement d'arrivée (23, 24), disposées de façon diamétralement opposée, les unités d'écoulement d'alimentation (23, 24) étant séparées l'une de l'autre du point de vue de l'écoulement et chaque unité d'écoulement d'alimentation (23, 24) incluant une moitié du plan d'écoulement d'alimentation (13, 14), un organe de commande (25-28) propre destiné à réguler l'écoulement d'alimentation en air neuf étant disposé pour chaque moitié du plan d'écoulement d'alimentation (13, 14) dans les unités d'écoulement d'alimentation (23, 24) respectives.
